(19) **Europäisches Patentamt**

**European Patent Office**

**Office européen des brevets**

(11) **EP 0 928 366 B1**

(12) **EUROPÄISCHE PATENTSCHRIFT**

(45) Veröffentlichungstag und Bekanntmachung des Hinweises auf die Patenterteilung:
**20.03.2002  Patentblatt 2002/12**

(21) Anmeldenummer: 97938773.5

(22) Anmeldetag: **14.08.1997**

(51) Int Cl.⁷: **F01N 3/22**, F01N 9/00

(86) Internationale Anmeldenummer:
**PCT/DE97/01753**

(87) Internationale Veröffentlichungsnummer:
**WO 98/13589 (02.04.1998 Gazette 1998/13)**

(54) **SEKUNDÄRLUFTSYSTEM FÜR EINE BRENNKRAFTMASCHINE**

SECONDARY-AIR SYSTEM FOR AN INTERNAL COMBUSTION ENGINE

SYSTEME D'AIR SECONDAIRE POUR MOTEUR A COMBUSTION INTERNE

(84) Benannte Vertragsstaaten:
**DE FR GB**

(30) Priorität: **27.09.1996  DE 19639912**

(43) Veröffentlichungstag der Anmeldung:
**14.07.1999   Patentblatt 1999/28**

(73) Patentinhaber: **SIEMENS AKTIENGESELLSCHAFT**
**80333 München (DE)**

(72) Erfinder:
• **BAYERLE, Klaus**
  **D-93051 Regensburg (DE)**

• **ZHANG, Hong**
  **D-93057 Regensburg (DE)**
• **ENGL, Maximilian**
  **D-86316 Friedberg (DE)**

(56) Entgegenhaltungen:
**EP-A- 0 594 114          EP-A- 0 663 516**
**WO-A-96/32579          GB-A- 2 225 877**

• **PATENT ABSTRACTS OF JAPAN vol. 010, no. 270 (M-517), 13.September 1986 & JP 61 093242 A (MAZDA MOTOR CORP;OTHERS: 01), 12.Mai 1986,**
• **PATENT ABSTRACTS OF JAPAN vol. 095, no. 007, 31.August 1995 & JP 07 109920 A (HITACHI LTD), 25.April 1995,**

# EP 0 928 366 B1

**Beschreibung**

Die Erfindung betrifft ein Sekundärluftsystem für eine Brennkraftmaschine gemäß Oberbegriff von Patentanspruch 1.

Aus der DE 43 07 737 A1 ist ein Sekundärluftsystem bekannt, das ein Sekundärluftrohr aufweist mit einer Einmündungsöffnung, die das Sekundärluftrohr mit einem Ansaugtrakt verbindet. Das Sekundärluftrohr ist über eine Auslaßöffnung mit einem Abgastrakt verbunden. Das Sekundärluftsystem ist ferner mit einem Sekundärluftventil versehen , das in dem Sekundärluftrohr angeordnet ist.

Aus der DE 27 15 951 A1 ist ein weiteres Sekundärlufsystem bekannt, bei dem die Einmündungsöffnung stromabwärts eines Luftmassenmessers und stromaufwärts einer Drosselklappe angeordnet ist.

Bei Brennkraftmaschinen, die nach dem Saug-Prinzip arbeiten, ist üblicherweise eine Pumpe in dem Sekundärluftrohr vorgesehen, die unter Berücksichtigung von der Last und der Drehzahl der Brennkraftmaschine gesteuert wird. Die Steuerung der Sekundärluftmasse ist relativ ungenau, da die Pumpe große Fertigungstoleranzen aufweist, und die Regelung der Sekundärluftmasse ist stark totzeitbehaftet, so daß ein gewünschtes Abgasverhältnis nur relativ ungenau einstellbar ist.

Aus der EP 0 663 516 A2 ist eine Einrichtung zum Überwachen eines Sekundärluftsystems bekannt, das ein Sekundärluftrohr hat, das über eine Einmündungsöffnung über einen Ansaugtrakt und über eine Auslassöffnung mit einem Abgastrakt verbunden ist. Die Einmündungsöffnung ist stromabwärts einem Luftmassenmesser und stromaufwärts einer Drosselklappe angeordnet. Ein Sekundärluftventil ist in dem Sekundärluftrohr angeordnet. Eine Steuereinrichtung steuert einen Öffnungsgrad des Sekundärluftventils. Ein Sekundärluftmassenstrom wird aus der Differenz des Messwertes des Luftmassenmessers und dem Schätzwert des Ansaugluftmassenstrom berechnet, der abhängig von der Drehzahl und dem Saugrohrdruck ermittelt wird.

Aus der EP 0 594 114 A2 ist ein System zum Steuern der Kraftstoffzumessung einer Brennkraftmaschine bekannt, bei dem unter Verwendung eines dynamischen Models des Ansaugtraktes eine Einspritzzeitdauer des Kraftstoffs abhängig von dem Drosselklappenwinkel, dem Saugrohrdruck und der Drehzahl bestimmt wird.

Die Aufgabe der Erfindung ist es, ein Sekundärluftsystem anzugeben bei dem die Aufheizung eines Katalysators optimiert wird, wobei dazu mit einfachen Mitteln eine präzise Einstellung eines Luftverhältnisses vor dem Katalysator zu ermöglichen ist.

Das Problem wird erfindungsgemäß durch die Merkmale des Patentanspruchs 1 gelöst.
Die Lösung zeichnet sich dadurch aus, daß bereits im Startbetrieb der Brennkraftmaschine die Emissionen sehr gering sind.

Vorteilhafte Ausgestaltungen der Erfindung sind in den Unteransprüchen gekennzeichnet.

Ein Ausführungsbeispiel der Erfindung ist im folgenden unter Bezugnahme auf die schematischen Zeichnungen näher erläutert.

Es zeigen:

Figur 1:    eine Brennkraftmaschine, die ein erfindungsgemäßes Sekundärluftsystem umfaßt,
Figur 2:    eine Brennkraftmaschine, die eine zweite Ausführungsform des Sekundärluftsystems umfaßt,
Figur 3 :    ein erstes Blockschaltbild, einer Steuereinrichtung gemäß Figur 1 oder 2
Figur 4 :    ein zweites Blockschaltbild, einer zweiten Ausführungsform der Steuereinrichtung gemäß Figur 1 oder 2
Figur 5:    ein Ablaufdiagramm eines Programms, mit dem eine Diagnoseeinrichtung das Sekundärluftsystem überwacht,
Figur 6 :    ein Ablaufdiagramm eines Programms, mit dem eine zweite Ausführungsform der Diagnoseeinrichtung das Sekundärluftsystem überwacht.

Elemente gleicher Konstruktion oder gleicher Funktion sind figurenübergreifend mit den gleichen Bezugszeichen versehen.

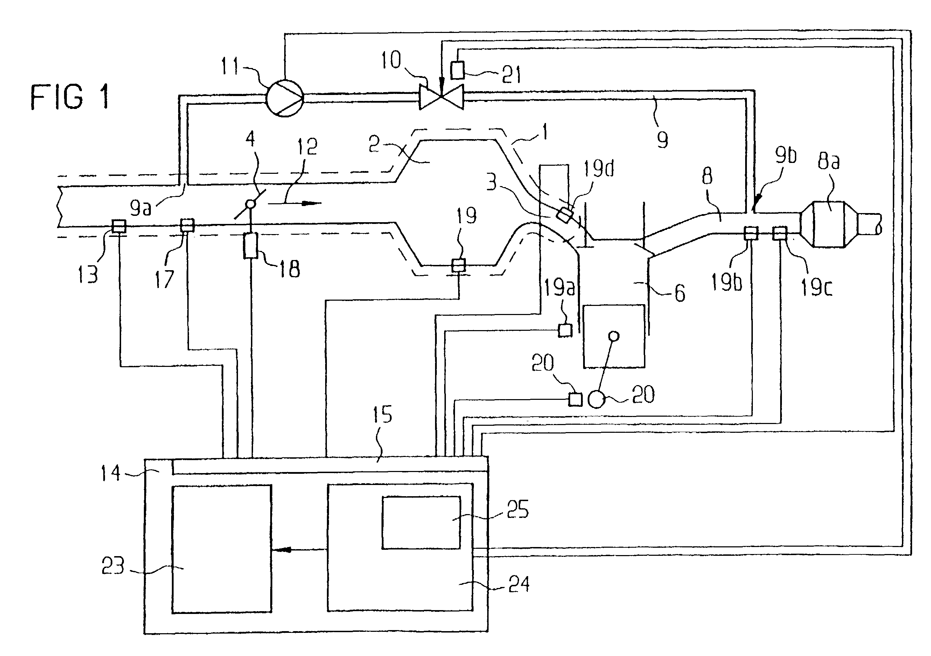

In Figur 1 ist eine Brennkraftmaschine gezeigt, wobei nur diejenigen Teile der Brennkraftmaschine dargestellt sind, die für das Verständnis der Erfindung notwendig sind.

Ein Ansaugtrakt 1 weist einen Sammler 2 und ein Saugrohr 3 auf. Desweiteren ist im Ansaugtrakt 1 eine Drosselklappe 4 angeordnet. Ein Gasdruck stromaufwärts der Drosselklappe 4 entspricht einem Umgebungsdruck $p_u$. Das Saugrohr 3 verbindet den Sammler 2 mit einem Einlaß eines Zylinders 6. Der Zylinder 6 ist mit einem Abgastrakt 8 verbunden, über den die Abgase ausgestoßen werden und in dem ein Katalysator 8a angeordnet ist.

Ein Sekundärluftsystem weist ein Sekundärluftrohr 9 mit einer Einmündungsöffnung 9a auf, die das Sekundärluftrohr 9 mit dem Ansaugtrakt 1 verbindet. Das Sekundärluftrohr ist ferner mit einer Auslaßöffnung 9b versehen, die es mit dem Abgastrakt 8 verbindet. Ein Sekundärluftventil 10, das einen nicht dargestellten elektropneumatischen Wandler umfaßt, ist in dem Sekundärluftrohr 9 angeordnet. Darüber hinaus ist in dem Sekundärluftrohr 9 eine Pumpe 11 angeordnet, die in einer einfachen Ausführung eine konstante Förderleistung hat oder in einer aufwendigeren Ausführung in der Drehzahl regelbar ist, so daß die Förderleistung einstellbar ist.

Die Einmündungsöffnung 9a des Sekundärluftrohres 9 befindet sich stromabwärts eines Luftmassenmessers 13 und stromaufwärts der Drosselklappe 4 im Ansaugtrakt, wobei mit dem Pfeil 12 die Strömungsrichtung der Ansaugluft bezeichnet ist. Diese Anordnung der Einmündungsöffnung 9a zeichnet sich dadurch aus, daß von dem Luftmassenmesser 13 ein erster Luftmassenstrom $\dot{m}_{LMM}$ erfaßt wird, der der Summe aus einem Sekundärluftmassenstrom $\dot{m}_{SL}$ und einem Luftmassenstrom $\dot{m}_{DK}$ an der Drosselklappe 4 entspricht.

Eine elektronische Motorsteuerung 14 umfaßt eine Vorverarbeitungseinheit 15, die Signale aufbereitet von Sensoren, die Betriebsgrößen der Brennkraftmaschine erfassen. In dem hier dargestellten Ausführungsbeispiel ist der Luftmassenmesser 13 vorgesehen, der den ersten Luftmassenstrom $\dot{m}_{LMM}$, erfaßt. Ein Temperatursensor 17 erfaßt die Ansauglufttemperatur $T_L$. Ein Winkelgeber 18 erfaßt den Öffnungswinkel $\alpha_{DK}$ der Drosselklappe 4. Ggf. ist auch ein Drucksensor 19 vorgesehen, der einen Saugrohrdruck $p_s$ erfaßt. Desweiteren ist ein Motortemperatursensor 19a vorgesehen, der die Motortemperatur erfaßt. In einer einfacheren Ausführungsform der Brennkraftmaschine wird die Motortemperatur aus einem Kennfeld abhängig von mindestens einer Betriebsgröße der Brennkraftmaschine ausgelesen.

Ein Kurbelwellenwinkelgeber erfaßt den aktuellen Kurbelwellenwinkel der Kurbelwelle 20, woraus die Motorsteuerung 14 die Drehzahl n der Kurbelwelle 20 bestimmt. In dem Abgastrakt 8 ist ein Abgasgegendrucksensor 19b angeordnet, der einen Abgas Abgasgegendruck $P_A$ erfaßt und über eine Signalleitung mit der Vorverarbeitungseinheit verbunden ist. Alternativ kann der Abgasgegendruck auch mit einer guten Genauigkeit aus einem Kennfeld abhängig von dem ersten Luftmassenstrom $\dot{m}_{LMM}$ ermittelt werden.

Desweiteren ist in dem Abgastrakt 8 eine Sauerstoffsonde 19c angeordnet, die den Restsauerstoffgehalt des Abgases stromaufwärts des Katalysators erfaßt und die diesem eine Luftzahl $\lambda_{VK}$ zuordnet. Ein Öffnungsgrad-Fühler 21 erfaßt den Öffnungsgrad OG des Sekundärluftventils. Die elektronische Motorsteuerung 14 weist darüber hinaus eine Diagnoseeinrichtung 23 auf, die das Sekundärluftsystem überwacht.

Die elektronische Motorsteuerung 14 weist auch eine Steuereinrichtung 24 auf, die elektrisch leitend mit dem elektropneumatischen Wandler des Sekundärluftventils verbunden ist. Sie steuert den elektropneumatischen Wandler des Sekundärluftventils derart an, daß in Abhängigkeit von dem Betriebszustand der Brennkraftmaschine und mindestens einer Betriebsgröße der Brennkraftmaschine - z. B. der Öffnungswinkel $\alpha_{DK}$ der Drosselklappe 4 und der Drehzahl n der Kurbelwelle 20a - der Öffnungsgrad OG des Sekundärluftventils 10 eingestellt wird. Alternativ kann auch ein elektromagnetischer Aktor für das Sekundärluftventil 10 vorgesehen sein. Desweiteren steuert die Steuereinrichtung 24 die Pumpe 11 auch in Abhängigkeit von dem Betriebszustand der Brennkraftmaschine und mindestens einer Betriebsgröße an. Die Steuereinrichtung 24 ermittelt in bekannter Weise eine Kraftstoffmasse, die pro Arbeitsspiel des Zylinders 6 eingespritzt wird über eine Einspritzanlage 19d. Ein Kraftstoffmassenstrom $\dot{m}_{KR}$ integriert über die Zeitdauer eines des Arbeitsspiels des Zylinders 6 entspricht der Kraftstoffmasse.

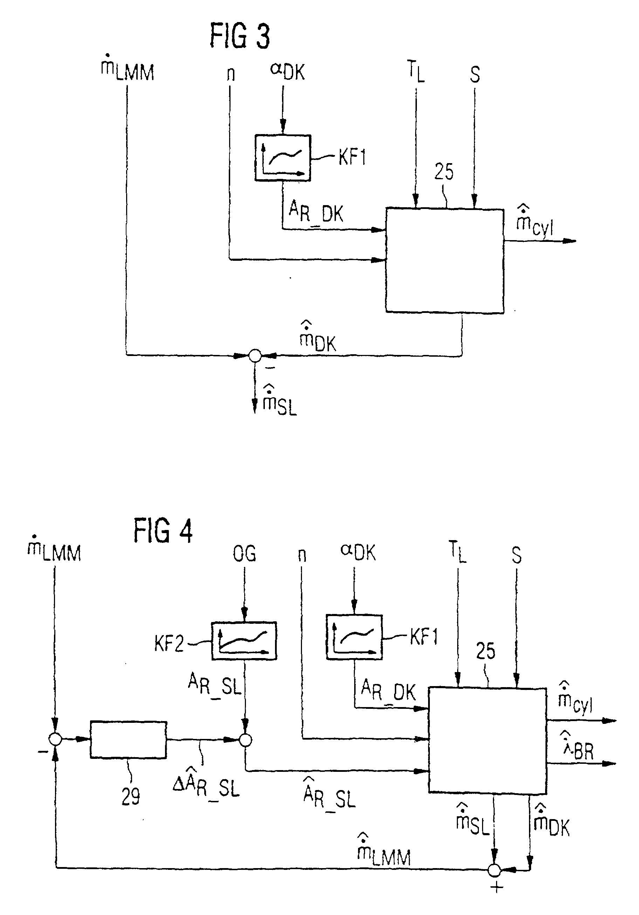

Die Steuereinrichtung 24 weist einen Beobachter 25 auf, der ein physikalisches Modell des Ansaugtraktes 1 umfaßt. Durch dieses Modell können auch im Instationärbetrieb der Brennkraftmaschine Betriebsgrößen ermittelt werden, die nicht direkt von Sensoren erfaßt werden. Diese Ausführungsform des Beobachters 25 ist weiter unten anhand von Figur 3 näher beschrieben.

Bei einer zweiten Ausführungsform umfaßt der Beobachter 25 ein physikalisches Modell des Ansaugtrakts 1 und des Sekundärluftsystems. Mit dieser Ausführungsform des Beobachters ist eine besonders präzise Ermittlung eines Sekundärluftmassenstroms $\dot{m}_{SL}$ möglich. Diese Ausführungsform des Beobachters 25 ist näher weiter unten anhand von Figur 4 beschrieben.

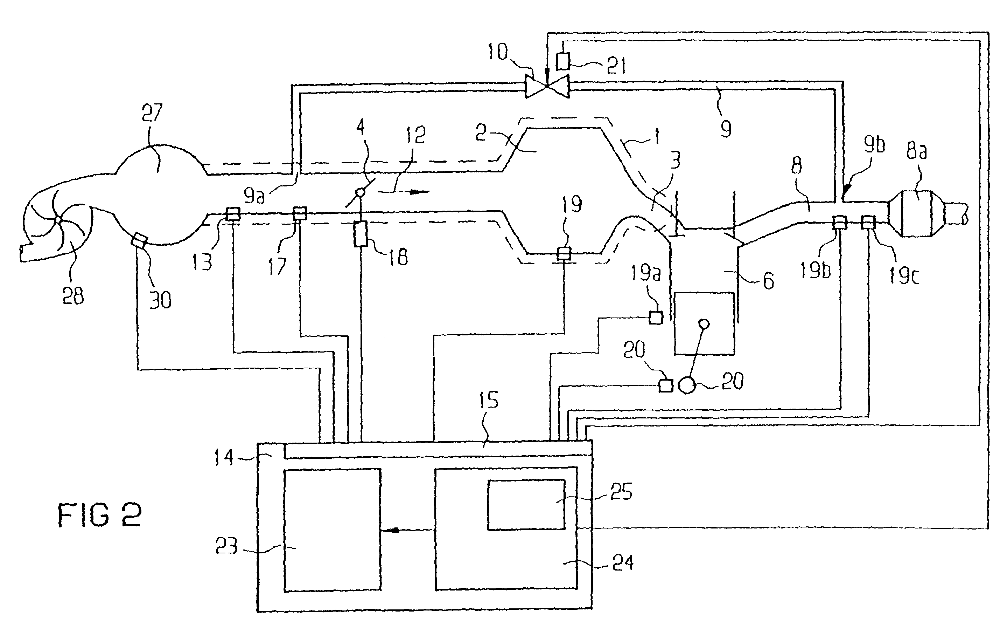

Figur 2 zeigt eine Brennkraftmaschine, die eine zweite Ausführungsform des Sekundärluftsystems umfaßt. Im Unterschied zu Figur 1 ist diese Brennkraftmaschine nicht als Saugmotor, sondern als Lademotor ausgebildet. Die Brennkraftmaschine gemäß Figur 2 weist einen Ladebehälter 27 auf, dem Frischluft mit einem erhöhten Ladedruck $p_L$ von einem Lader 28 zugeführt wird. Ein Ladesensor 30 erfaßt den Ladedruck $p_L$. Im Unterschied zu Figur 1 ist in dem Sekundärluftrohr keine Pumpe 11 vorgesehen, da der Ladedruck $p_L$ ausreicht zur Förderung von Sekundärluft durch das Sekundärluftrohr 9. Der Gasdruck stromaufwärts der Drosselklappe entspricht bei der Brennkraftmaschine gemäß Figur 2 dem Ladedruck $p_L$.

In den Figuren 3 und 4 sind ausgewählte Betriebsgrößen der Brennkraftmaschine eingezeichnet. Dabei bedeutet das Dachsymbol "^" über einer Betriebsgröße, daß es sich um eine Schätzwert handelt, während Betriebsgrößen ohne Dachsymbol Meßgrößen repräsentieren, denen Meßwerte zugeordnet sind. Größen mit einem Punktsymbol kennzeichnen die erste zeitliche Ableitung der entsprechenden Betriebsgröße.

Um ein schnelles Aufheizen des Katalysators 8a nach dem Start der Brennkraftmaschine zu gewährleisten und gleichzeitig den Ausstoß von Emissionen zu minimieren, ist eine präzise Ermittlung des Vor-Katalysator-Luftverhältnisses $\lambda_{VK}$ notwendig. Das Vor-Katalysator-Luftverhältnis $\lambda_{VK}$ berechnet sich nach der Formel:

$$\lambda_{VK} = \frac{\dot{m}_{SL} + \dot{m}_{CYL}}{\dot{m}_{KR} \cdot L} \tag{1.0}$$

dabei gilt

$\dot{m}_{SL}$      Sekundärluftmassenstrom
$\dot{m}_{CYL}$    Zylinderluftmassenstrom
$\dot{m}_{KR}$    Kraftstoffmassenstrom
$L$        stöchiometrischer Luftbedarf .

Das Luftverhältnis im Brennraum des Zylinders 6 ergibt sich nach folgender Formel

$$\lambda_{BR} = \frac{\dot{m}_{CYL}}{\dot{m}_{KR} \cdot L} \tag{2.0}$$

Aus den Formeln (1.0 und 2.0) folgt:

$$\lambda_{BR} = \frac{\dot{m}_{CYL}}{m_{CYL} + m_{SL}} \cdot \lambda_{VK} \tag{3.0}$$

Die Berechnung des Kraftstoffmassenstroms $\dot{m}_{KR}$ erfolgt mit der Formel:

$$\dot{m}_{KR} = \frac{\dot{m}_{SL} + \dot{m}_{CYL}}{\lambda_{VK} \cdot L_{MN}} \tag{4.0}$$

Das Vor-KatalysatorLuftverhältnis $\lambda_{VK}$ wird dabei von der Motorsteuerung vorgegeben. Zum Erreichen einer möglichst kurzen Zeit, innerhalb der der Katalysator 8a auf eine Betriebstemperatur von ca. 300 Grad aufgeheizt wird, wird $\lambda_{VK} > 1$ vorgegeben, vorzugsweise im Bereich von 1,0 bis 1,3.
Um im stationären als auch im instationären Motorbetrieb, die Vor-Katalysator-Luftzahl $\lambda_{VK}$ auch tatsächlich einzustellen, muß der Sekundärluftmassenstrom $\dot{m}_{SL}$ und der Luftmassenstrom in den Zylinder $\dot{m}_{CYL}$ bekannt sein. Da der Sekundärluftmassenstrom $\dot{m}_{SL}$ und der Zylinderluftmassenstrom $\dot{m}_{CYL}$ nicht direkt von Sensoren erfaßt werden, ist der Beobachter 25 vorgesehen, der ein physikalisches Modell des Ansaugtraktes 1 bzw. des Ansaugtraktes 1 und des Sekundärluftsystems umfaßt und der Modellgrößen des Sekundärluftmassenstroms $\dot{m}_{SL}$ und des Zylinderluftmassenstroms $\dot{m}_{CYL}$ ermittelt. Die Modellgröße für den Luftmassenstrom $\hat{\dot{m}}_{DK}$ an der Drosselklappe 4 wird im folgenden als zweiter Luftmassenstrom $\hat{\dot{m}}_{DK}$ bezeichnet, die Modellgröße für den Zylinder-Luftmassenstrom $\dot{m}_{CYL}$ wird im folgenden als dritter Luftmassenstrom $\hat{\dot{m}}_{CYL}$ bezeichnet.
Das Modell des Ansaugtraktes 1 oder des Ansaugtraktes und des Sekundärluftsystems beruht auf der Zustandsgleichung idealer Gase und der Durchflußgleichung idealer Gase durch Drosselstellen.
Ein derartiges Modell des Ansaugtraktes ist in der nicht vorveröffentlichten deutschen Patentanmeldung ( WO 96/32579) beschrieben, deren Inhalt hiermit einbezogen ist.
Der zweite Luftmassenstrom $\hat{\dot{m}}_{DK}$ wird durch die Durchflußgleichung idealer Gase durch Drosselstellen beschrieben. Der zweite Luftmassenstrom $\hat{\dot{m}}_{DK}$ wird demnach durch die Beziehung

$$\hat{\dot{m}}_{DK} = A_{R\_DK} \sqrt{\frac{2\kappa}{\kappa - 1} \cdot \frac{1}{R_L \cdot T_L}} \cdot \hat{p}_U \cdot \psi_{DK} \tag{6.0}$$

mit der Durchflußfunktion an der Drosselklappe 4

$$\psi_{DK} = \sqrt{\left(\frac{\hat{p}_S}{\hat{p}_U}\right)^{\frac{2}{\kappa}} - \left(\frac{\hat{p}_S}{\hat{p}_U}\right)^{\left(\frac{\kappa+1}{\kappa}\right)}}$$

für Überkritische für Druckverhältnisse bzw. $\psi_{DK}$ = const. für kritische Druckverhältnisse bestimmt.

Dabei bedeuten $A_{R\_DK}$ :     reduzierter Strömungsquerschnitt an der Drosselklappe 4
$\kappa$ :     Adiabatenexponent
$R_L$ :     allgemeine Gaskonstante^
$p_U$ :     Modellgröße des Umgebungsdrucks
$p_S$ :     Modellgröße des Saugrohrdrucks stromabwärts der Drosselklappe 4 im Ansaugtrakt 1.

An der Drosselklappe 4 auftretende Strömungsverluste werden durch den reduzierten Strömungsquerschnitt $A_{R\_DK}$ berücksichtigt. Aus stationären Messungen kann bei bekannten Drücken oft stromaufwärts und stromabwärts der Drosselklappe 4 und einem bekannten Luftmassenstrom an der Drosselklappe 4 eine Zuordnung zwischen dem vom Winkelgeber 14 erfaßten Öffnungswinkel $\alpha_{DK}$ und dem entsprechenden reduzierten Drosselklappen-Strömungsquerschnitt $A_{R\_DK}$ angegeben werden.

Zur Reduktion des Rechenaufwands beim Ermitteln des zweiten Luftmassenstroms $\hat{m}_{DK}$ gemäß der Formel 6.0 läßt sich die Durchflußfunktion $\psi_{DK}$ für die Drosselklappe 4 durch einen Polygonzug approximieren. Mit einer vertretbaren Anzahl von Geradenabschnitten kann damit eine gute Aproximation der Durchflußfunktion an der Drosselklappe 4 erreicht werden. Die nicht vorveröffentlichte deutsche Patentanmeldung derselben Anmelderin (WO 96/32579) beschreibt eine derartige Polygonzugaproximation.

Der dritte Luftmassenstrom $\hat{m}_{CYL}$ , der die Modellgröße für den Luftmassenstrom in den Zylinder 6 ist, läßt sich analytisch nur schwer berechnen, da er stark vom Ladungswechsel abhängt. Die Füllung der Zylinder wird weitgehend durch den Saugrohrdruck $p_S$, die Drehzahl n und durch die Motorventilsteuerungszeiten bestimmt.

Zur möglichst genauen Berechnung des dritten Luftmassenstroms $\hat{m}_{CYL}$ ist deshalb einerseits die Beschreibung der physikalischen Verhältnisse im Ansaugtrakt 1 der Brennkraftmaschine mittels partieller Differentialgleichungen und andererseits die Berechnung des zweiten Luftmassenstroms $\hat{m}_{DK}$ als erforderliche Randbedingung notwendig. Dieser komplizierte Ansatz gestattet die Berücksichtigung dynamischer Nachladeeffekte, die von der Drehzahl, der Saugrohrgeometrie, der Zylinderzahl, sowie den Motorventilsteuerzeiten maßgeblich beeinflußt werden.

Da eine Berechnung nach dem o. g. Ansatz in der Steuereinrichtung 24 nicht realisierbar ist, geht eine mögliche Näherung von einem einfachen Zusammenhang zwischen dem Saugrohrdruck $p_S$ und dem dritten Luftmassenstrom $\hat{m}_{CYL}$ aus, der durch die Beziehung

$$\hat{m}_{CYL} = \gamma_1 \bullet \hat{p}_S + \gamma_0 \qquad\qquad (7.0)$$

vorgegeben ist. Die Steigung $\gamma_1$ und das Absolutglied $\gamma_0$ der Beziehung 7.0 sind dabei abhängig von der Drehzahl n und/oder der Saugrohrgeometrie und/oder der Anzahl der Zylinder der Brennkraftmaschine und/oder den Motorventilsteuerzeiten und/oder der Ansauglufttemperatur $T_L$. Die Abhängigkeit der Steigung $\gamma_1$ und des Absolutgliedes $\gamma_0$ von den vorgenannten Größen können dabei über stationäre Messungen ermittelt werden und den Kennfeldern in der Steuereinrichtung fest gespeichert sein.

Zum Ermitteln des zweiten Luftmassenstroms $\hat{m}_{DK}$ nach Formel 6.0 und zum Ermitteln des dritten Luftmassenstroms $\hat{m}_{CYL}$ gemäß Formel 7.0 muß der Saugrohrdruck $p_S$ ermittelt werden. Unter der Voraussetzung einer konstanten Ansauglufttemperatur $T_L$ läßt sich die Zustandsgleichung idealer Gase für den Saugrohrdruck $p_S$, aufstellen:

$$\hat{\dot{p}}_S = \frac{R_T \bullet T_S}{V_S} \bullet \left(\hat{m}_{DK} - \hat{m}_{CYL}\right) \qquad\qquad (8.0)$$

$\hat{\dot{p}}_S$ :     zeitliche Ableitung der Modellgröße des Saugrohr drucks,

$_S$ : Saugrohrvolumen

Die durch die Gleichung 8.0 beschriebenen Verhältnisse sind auf Mehrzylinder-Brennkraftmaschinen mit Schwingrohr oder Schaltsaugrohr oder Resonanzsaugsystem ohne strukturelle Änderungen anwendbar. Durch ein Einsetzen der Gleichungen 6.0 und 7.0 in die Gleichung 8.0 läßt sich die partielle Differentialgleichung gemäß Gleichung 8.0 in eine gewöhnliche Differentialgleichung überführen. Zum Lösen dieser gewöhnlichen Differentialgleichung wird diese vorzugsweise, mit Hilfe eines numerischen Approximationsverfahrens, wie z. B. der Trapezregel in eine entsprechende Differenzengleichung überführt.

Eine derartige Differenzengleichung liefert mit geringem Rechenaufwand gute Approximationswerte für den Saugrohrdruck $p_S$. Die Modellgröße für den Umgebungsdruck $p_U$, wird vorteilhafterweise aus dem Wert des Saugrohrdrucks $p_S$. bei motorischer Vollast, d. h. bei fast vollständig geöffneter Drosselklappe 4 ermittelt.

Figur 3 zeigt ein erstes Blockschaltbild einer ersten Ausführungsform der Steuereinrichtung 25. Der Beobachter 25 ermittelt gemäß den Formeln 6.0 und 7.0 den zweiten Luftmassenstrom $\hat{\dot{m}}_{DK}$ und den dritten Luftmassenstrom $\hat{\dot{m}}_{CYL}$. Darüber hinaus ermittelt der Beobachter 25 auch den Saugrohrdruck $p_S$. In einem ersten Kennfeld KF1 ist dem Öffnungswinkel $\alpha_{DK}$ der reduzierte Drosselklappen-Strömungsquerschnitt $\hat{A}_{R\_DK}$ zugeordnet. In einer komfortableren Ausführungsform der Erfindung erfolgt eine Korrektur des Drosselklappen-Strömungsquerschnitts $A_{R\_DK}$ in Abhängigkeit von der Abweichung des ersten Luftmassenstroms $\dot{m}_{LMM}$ von dem zweiten Luftmassenstrom $\hat{\dot{m}}_{DK}$ unter Berücksichtigung des dynamischen Verhaltens des Luftmassenmessers 13 bei Betriebszuständen, in denen keine Sekundärluft dem Abgastrakt zugeführt wird. Dadurch wird die Genauigkeit der Modellgrößen erhöht. Der Sekundärluftmassenstrom $\hat{\dot{m}}_{SL}$ ergibt sich aus der Differenz des ersten Luftmassenstroms $\dot{m}_{LMM}$ und des zweiten Luftmassenstroms $\hat{\dot{m}}_{DK}$.

Figur 4 zeigt ein zweites Blockschaltbild einer zweiten Ausführungsform der Steuereinrichtung gemäß Figur 1 oder 2. Der Beobachter 25 umfaßt ein physikalisches Modell des Ansaugtraktes und ermittelt den zweiten Luftmassenstrom $\hat{\dot{m}}_{DK}$ und den dritten Luftmassenstrom $\hat{\dot{m}}_{CYL}$ analog zu Figur 3 gemäß den Formeln 6.0 bzw. 7.0. Darüber hinaus weist der Beobachter auch ein physikalisches Modell der Sekundärluftsystems auf. Der Beobachter ermittelt den Sekundärluftmassenstrom $\hat{\dot{m}}_{SL}$ nach der Formel

$$\hat{\dot{m}}_{SL} = K1 * \hat{A}_{R\_SL} \qquad\qquad (9.0)$$

K1 ist ein erster Korrekturfaktor, der dimensionsbehaftet ist. $\hat{A}_{R\_SL}$ ist ein reduzierter Beobachter-Strömungsquerschnitt an dem Sekundärluftventil 10, der sich aus einem reduzierten Strömungsquerschnitt $A_{R\_SL}$ und einem Korrektur-Strömungsquerschnitt $\Delta\hat{A}_{R\_SL}$ zusammensetzt. Bei einer Brennkraftmaschine gemäß Figur 1 wird der erste Korrekturfaktor K1 nach der Formel

$$K1 = C_p \bullet KF_3\left(\frac{\hat{p}_U}{\hat{p}_A}\right) \bullet \frac{\hat{p}_U}{T_U} \quad (10.0)$$

ermittelt. Dabei ist $C_p$ eine Konstante, $KF_3$ ein Kennfeld der Pumpe 11 in Abhängigkeit von dem Umgebungsdruck $\hat{p}_U$ und dem Abgasgegendruck $p_A$.

Bei einer Ausführungsform der Brennkraftmaschine gemäße Figur 2 wird der Korrekturfaktor K1 vorteilhaft nach der Formel

$$K1 = \sqrt{\frac{2\kappa}{\kappa-1} \bullet \frac{1}{R_L \bullet T_U}} \bullet \psi \bullet p_L \qquad\qquad (11.0)$$

mit

$$\Psi = \sqrt{\left(\frac{p_L}{p_A}\right)^{2\kappa} - \left(\frac{p_L}{p_A}\right)^{\frac{\kappa-1}{\kappa}}} \,,$$

wobei

$p_L$ ein Ladedruck ist, der von dem Ladedrucksensor 30 erfaßt wird. Die Durchflußfunktion Ψ wird vorteilhaft mit einem Polygonzugverfahren approximiert. Die erfolgt wie im Zusammenhang mit der Durchflußfunktion an der Drosselklappe beschrieben.

Dem Öffnungsgrad OG des Sekundärluftventils 10 ist über ein Kennfeld KF2 der reduzierte Strömungsquerschnitt $A_{R\_SL}$ zugeordnet. In einer komfortablen Ausführungsform der Erfindung wird der reduzierte Strömungsquerschnitt $A_{R\_SL}$ mit dem Korrektur-Strömungsquerschnitt $\Delta \hat{A}_{R\_SL}$ korrigiert. Der Korrektur-Strömungsquerschnitt $\Delta \hat{A}_{R\_SL}$ ist die Ausgangsgröße eines Reglers 29 dessen Führungsgröße der erste Luftmassenstrom $\dot{m}_{LMM}$ ist und dessen Regelgröße die Beobachtergröße des ersten Luftmassenstroms $\hat{\dot{m}}_{LMM}$ ist. Die Beobachtergröße $\hat{\dot{m}}_{LMM}$ ergibt sich aus der Summe des Sekundärluftmassenstroms $\hat{\dot{m}}_{SL}$ und des zweiten Luftmassenstroms $\hat{\dot{m}}_{DK}$. Der Regler weist vorzugsweise integrales Regelverhalten auf, so daß der reduzierte Beobachter-Strömungsquerschnitt $\hat{A}_{R\_SL}$ stationär genau ist. Eine Verbesserung der Genauigkeit der Beobachtergröße des ersten Luftmassenstroms $\hat{\dot{m}}_{LMM}$ ergibt sich, wenn auch das dynamische Verhalten des Luftmassensmessers und die Abtastrate des Signals des Luftmassenmesser berücksichtigt werden.

Bei einem bekannten Kraftstoffmassenstrom $\dot{m}_{KR}$ wird in einer weiteren Ausgestaltung der Erfindung das Luftverhältnis $\lambda_{BR}$ im Zylinder 6 der Brennkraftmaschine auf die Unterschreitung einer Mindestschwelle überprüft. Dazu wird ein Beobachter-Luftverhältnis $\hat{\lambda}_{BR}$ gemäß Formel 12.0

$$\hat{\lambda}_{BR} = \frac{\hat{\dot{m}}_{CYL.}}{\dot{m}_{KR} \bullet L} \qquad (12.0)$$

ermittelt. Falls $\hat{\lambda}_{BR}$ kleiner ist als ein vorgegebener unterer Schwellenwert $\lambda_{BRMIN}$, dann wird der Kraftstoffmassenstrom $\dot{m}_{KR}$ gemäß der Formel 13

$$\dot{m}_{KR} = \frac{\hat{\dot{m}}_{CYL.}}{\lambda_{BRMIN} \bullet L} \qquad (13.0)$$

korrigiert. So ist es gewährleistet, daß es im Brennraum des Zylinders 6 es nicht zu Verbrennungsaussetzern kommt.

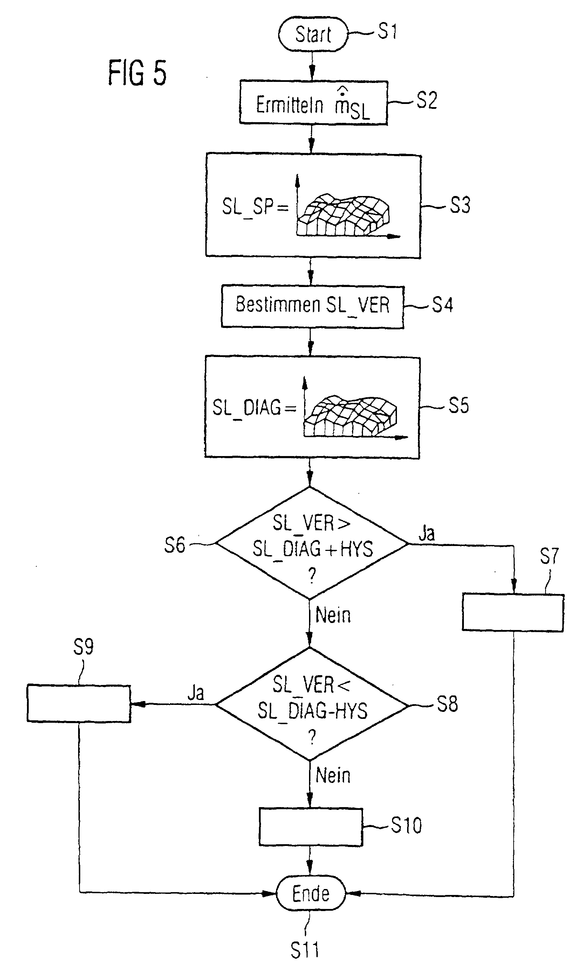

Figur 5 zeigt ein Ablaufdiagramm eines Programms, mit dem eine Diagnoseeinrichtung 23 das Sekundärluftsystem mit einer Steuereinrichtung gemäß dem Blockschaltbild von Figur 3. Das Programm startet in einem Schritt S1 In einem Schritt S2 wird ein Sekundärluftmassenstrom $\hat{\dot{m}}_{SL}$ ermittelt.

In einem Schritt S3 wird der Sollwert SL_SP des Sekundärluftmassenstroms aus einem Kennfeld abhängig von dem Betriebszustand der Brennkraftmaschine und/ oder dem Drosselklappenwinkel $\alpha_{DK}$ und/ oder der Drehzahl n ausgelesen.

In einem Schritt S4 wird ein Diagnosewert SL_VER ermittelt. Dem Diagnosewert SL_VER wird entweder das Verhältnis von dem Sekundärluftmassenstrom $\hat{\dot{m}}_{SL}$ zu dem Sollwert SL_SP des Sekundärluftmassenstroms zugewiesen oder die Differenz zwischen dem Sekundärluftmassenstrom $\hat{\dot{m}}_{SL}$ und dem Sollwert SL_SP des Sekundärluftmassenstroms zugewiesen.

In dem Schritt S5 wird ein Diagnoseschwellenwert aus einem Kennfeld ausgelesen.

In dem Schritt S6 wird überprüft ob der Diagnosewert SL_VER größer ist als der Diagnoseschwellenwert SL_DIAG plus ein vorgegebener Hysteresewert HYS. Ist dies der Fall so wird in Schritt S7 verzweigt und auf einen Fehler im Sekundärluftsystem erkannt. Anschließend wird das Programm im Schritt S11 beendet.

Ist die Bedingung von Schritt S6 nicht erfüllt so wird in den Schritt S8 verzweigt. Im Schritt S8 wird überprüft, ob der Diagnosewert SL_VER kleiner ist als der Diagnoseschwellenwert SL_DIAG minus dem Hysteresewert HYS. Ist dies der Fall, so wird in den Schritt S9 verzweigt, in dem ein Fehler des Sekundärluftsystems erkannt wird.

Ist dies nicht der Fall, so wird in den Schritt S10 verzweigt, in dem erkannt wird, daß das Sekundärluftsystem einwandfrei funktioniert. Nach den Schritten S9 und S10 wird das Programm im Schritt S1 beendet.

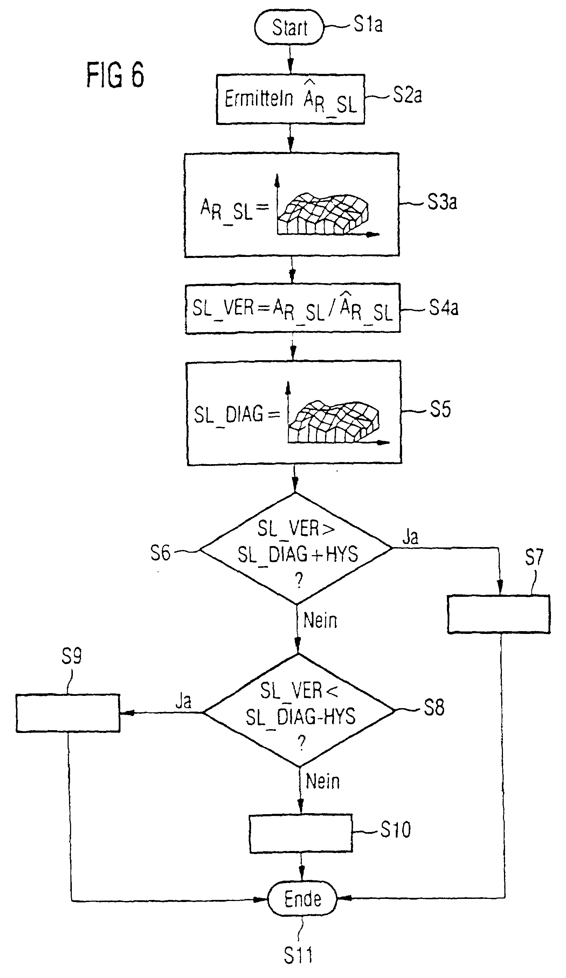

Figur 6 zeigt ein Ablaufdiagramm eines Programms, mit dem eine zweite Ausführungsform der Diagnoseeinrichtung das Sekundärluftsystem überwacht.

In einem Schritt S1a wird das Programm gestartet. In einem Schritt S2a wird der reduzierte Beobachter-Strömungsquerschnitt $\hat{A}_{R\_SL}$ entsprechend Figur 4 berechnet. In dem Schritt S3a wird aus dem zweiten Kennfeld KF2 der reduzierte Strömungsquerschnitt $A_{R\_SL}$ ermittelt. In dem Schritt S4a wird der Diagnosewert SL_VER ermittelt. Dazu wird dem Diagnosewert SL_VER das Verhältnis von dem reduzierten Strömungsquerschnitt $A_{R\_SL}$ zu dem re-

duzierten Beobachter-Strömungsquerschnitt $\hat{A}_{R\_SL}$ zugewiesen. In einer alternativen Ausführungsform wird dem Diagnosewert die Differenz zwischen dem reduzierten Strömungsquerschnitt $A_{R\_SL}$ und dem reduzierten Beobachter - Strömungsquerschnitt $\hat{A}_{R\_SL}$ zugewiesen.

Die Schritte S5 bis S11 sind identisch mit denen aus Figur 5. Es ist für den einschlägigen Fachmann klar ersichtlich, daß die Diagnoseeinrichtung auch ohne die Merkmale des Patentanspruchs 1 unabhängig brauchbar und einsatzfähig ist.

**Patentansprüche**

1.  Sekundärluftsystem für eine Brennkraftmaschine, das aufweist

    -   ein Sekundärluftrohr (9), das über eine Einmündungsöffnung (9a) mit einem Ansaugtrakt (1) und über eine Auslaßöffnung (9b) mit einem Abgastrakt (8) verbunden ist, wobei die Einmündungsöffnung (9a) stromabwärts eines Luftmassenmessers (13), der einen Meßwert eines ersten Luftmassenstroms ($\dot{m}_{LMM}$) ermittelt, und stromaufwärts einer Drosselklappe (4) angeordnet ist,
    -   ein Sekundärluftventil (10) in dem Sekundärluftrohr (9),
    -   eine Steuereinrichtung (24), die einen Öffnungsgrad (OG) des Sekundärluftventils (10) steuert, **dadurch gekennzeichnet,**
    -   **daß** die Steuereinrichtung einen Beobachter (25) hat, der ein physikalisches Modell des Ansaugtraktes (1) und des Sekundärluftsystems umfaßt,
    -   **daß** der Beobachter einen Schätzwert des Sekundärluftmassenstroms ($\hat{\dot{m}}_{SL}$) ermittelt nach der Formel

$$\hat{\dot{m}}_{SL} = K1 * \hat{A}_{R\_SL}, \quad (9.0)$$

    wobei K1 ein erster Korrekturfaktor und ($\hat{A}_{R\_SL}$) ein reduzierter Beobachter-Strömungsquerschnitt an dem Sekundärluftventil (10) ist, der sich aus einem reduzierten Strömungsquerschnitt ($A_{R\_SL}$) und einem Korrektur-Strömungsquerschnitt ($\Delta\hat{A}_{R\_SL}$) zusammensetzt,

    -   **daß** der reduzierte Strömungsquerschnitt ($A_{R\_SL}$) aus einem zweiten Kennfeld (KF2) abhängig von dem Öffnungsgrad (OG) des Sekundärluftventils (10) ermittelt wird,
    -   **daß** der Beobachter in Abhängigkeit von dem Öffnungswinkel ($\alpha_{DK}$) der Drosselklappe (4) , von einem Gasdruck stromaufwärts der Drosselklappe (4) und von einem Saugrohrdruck ($p_S$) den zweiten Luftmassenstrom ($\hat{\dot{m}}_{DK}$) ermittelt,
    -   **daß** ein Regler (29) abhängig von dem Sekundärluftmassenstrom ($\hat{\dot{m}}_{SL}$), dem ersten Luftmassenstrom ($\dot{m}_{LMM}$) und dem zweiten Luftmassenstrom ($\hat{\dot{m}}_{DK}$) den Korrektur-Strömungsquerschnitt ($\Delta\hat{A}_{R\_SL}$) ermittelt und
    -   **daß** die Kraftstoffmasse, die von einer Einspritzanlage (19d) eingespritzt wird, abhängig von dem Schätzwert des Sekundärluftmassenstroms ($\hat{\dot{m}}_{SL}$) eingestellt wird.

2.  Sekundärluftsystem nach Anspruch 1, **dadurch gekennzeichnet, daß** die Summe des Sekundärluftmassenstroms ($\hat{\dot{m}}_{SL}$) und des zweiten Luftmassenstrom ($\hat{\dot{m}}_{DK}$) die Regelgröße und der erste Luftmassenstrom ($\dot{m}_{LMM}$) die Führungsgröße für den Regler (29) sind, dessen Stellsignal den Korrektur-Strömungsquerschnitt ($\Delta\hat{A}_{R\_SL}$) bestimmt.

3.  Sekundärluftsystem nach einem der vorhergehenden Ansprüche, **dadurch gekennzeichnet,**

    -   **daß** in dem Sekundärluftrohr (9) eine Pumpe (11) angeordnet ist,
    -   **daß** der erste Korrekturfaktor (K1) aus einem dritten Kennfeld (KF3) ermittelt wird, das abhängig ist von dem Umgebungsdruck ($P_U$), einem Abgasgegendruck ($P_A$) und/oder der Ansauglufttemperatur ($T_L$).

4.  Sekundärluftsystem nach einem der Ansprüche 1 oder 2, **dadurch gekennzeichnet,**

    -   **daß** die Brennkraftmaschine einen Lader (28) aufweist, der stromaufwärts von einem Ladebehälter (27) angeordnet ist, wobei der Ladebehälter (27) stromaufwärts des Luftmassenmessers (13) in dem Ansaugtrakt (1) angeordnet ist und in dem Ladebehälter (27) ein Ladedrucksensor (30) vorgesehen ist, der einen Ladedruck ($p_L$) erfaßt,
    -   **daß** der erste Korrekturfaktor (K1) eine Funktion, des Ladedrucks ($P_L$), des Abgasgegendrucks ($p_A$) und der

**EP 0 928 366 B1**

Ansauglufttemperatur ($T_U$) ist.

5. Sekundärluftsystem nach Anspruch 4, **dadurch gekennzeichnet, daß** der erste Korrekturfaktor (K1) nach der Formel

$$K1 = \sqrt{\frac{2\kappa}{\kappa-1} \cdot \frac{1}{R_L \cdot T_U}} \cdot \Psi \cdot p_L; \qquad\qquad (11.0)$$

mit

$$\Psi = \sqrt{\left(\frac{p_L}{p_A}\right)^{2\kappa} - \left(\frac{p_L}{p_A}\right)^{\frac{\kappa-1}{\kappa}}};$$

$\kappa$:     Adiabatenexponent
$R_L$ :     allgemeine Gaskonstante

ermittelt wird.

6. Sekundärluftsystem nach einem der vorhergehenden Ansprüche, **dadurch gekennzeichnet, daß** eine Diagnoseeinrichtung (23) zum Überwachen des Sekundärluftsystems vorgesehen ist, die einen Fehlzustand erkennt, wenn der reduzierte Beobachter-Strömungsquerschnitt (ARED_SL) außerhalb eines Wertebereichs liegt.

**Claims**

1. Secondary-air system for an internal combustion engine, that has

   - a secondary-air pipe (9), that is connected via an inlet opening (9a) to an intake tract (1) and via an outlet opening (9b) to an exhaust-gas tract (8), whereby the inlet opening (9a) is arranged downstream of an air mass sensor (13), that determines a measured value of a first air mass flow ($\dot{m}_{LMM}$), and upstream of a throttle valve (4),

   - a secondary-air valve (10) in the secondary-air pipe (9),

   - a control device (24), that controls a degree of opening (OG) of the secondary-air valve (10), **characterised in that**

   - the control device has an observer (25) that includes a physical model of the intake tract (1) and of the secondary-air system,

   - that the observer determines an estimated value of the secondary-air mass flow ($\hat{\dot{m}}_{SL}$) in accordance with the following formula

$$\hat{\dot{m}}_{SL} = K1 * \ \hat{A}_{R\_SL}$$

   whereby K1 is a first correction factor and ($\hat{A}_{R\_SL}$) a reduced observer flow cross-section at the secondary-air valve (10), that consists of a reduced flow cross-section ($A_{R\_SL}$) and a correction flow cross-section ($\Delta\hat{A}_{R\_SL}$),

   - that the reduced flow cross-section ($A_{R\_SL}$) is determined from a second map (KF2) relative to the degree of opening (OG) of the secondary-air valve (10),

   - that the observer determines the second air mass flow ($\hat{\dot{m}}_{DK}$) from the opening angle ($\alpha_{DK}$) of the throttle valve (4), from a gas pressure upstream of the throttle valve (4) and from an intake pipe pressure ($p_S$),

- that a controller (29) determines the correction flow cross-section ($\Delta \hat{A}_{R\_SL}$) relative to the secondary-air mass flow ($\hat{m}_{SL}$), the first air mass flow ($\hat{m}_{LMM}$) and the second air mass flow ($\hat{m}_{DK}$) and

- that the fuel mass injected by an injection system (19d) is set relative to an estimated value of the secondary-air mass flow ($\hat{m}_{SL}$).

2. Secondary-air system in accordance with claim 1, **characterised in that** the sum of the secondary-air mass flow ($\hat{m}_{SL}$) and of the second air mass flow ($\hat{m}_{CYL}$) is the manipulated variable and the first air mass flow ($\dot{m}_{LMM}$) the command variable for the controller (29), the actuating signal of which determines the correction of the flow cross-section ($\Delta \hat{A}_{R\_SL}$).

3. Secondary-air system in accordance with one of the preceding claims, **characterised in that**

- a pump (11) is fitted in the secondary-air pipe (9),

- that the first correction factor (K1) is determined from a third map (KF3) that is relative to the ambient pressure ($P_U$), an exhaust-gas backpressure ($P_A$) and/or the intake air temperature ($T_L$).

4. Secondary-air system in accordance with one of Claims 1 or 2, **characterised in that**,

- the internal combustion engine has a supercharger (28) that is fitted upstream of a charger tank (27), whereby the charger tank (27) is arranged upstream of the airflow sensor (13) in the intake tract (1) and a charge pressure sensor (30) that detects a charge pressure ($p_L$) is provided in the charge tank (27)

- that the first correction factor (K1) is a function of the charge pressure ($p_L$), the exhaust-gas backpressure ($p_A$) and the intake air temperature ($T_U$).

5. Secondary-air system in accordance with Claim 4, **characterised in that** the first correction factor (K1) is determined in accordance with the following formula:

$$K1 = \sqrt{\frac{2\kappa}{\kappa\text{-}1} \cdot \frac{1}{R_L \cdot T_U}} \cdot \psi \, p_L \qquad\qquad (11.0)$$

where

$$\psi = \sqrt{\left(\frac{p_L}{p_A}\right)^{2\kappa} - \left(\frac{p_L}{p_A}\right)^{\frac{\kappa\text{-}1}{\kappa}}}$$

$\kappa$     is the adiabatic exponent

$R_L$     is the general gas constant

6. Secondary-air system in accordance with one of the preceding claims, **characterised in that** a diagnostic device (23) is provided for monitoring the secondary-air system, which detects a fault condition if the reduced observer flow cross-section (ARED_SL) is outside a value range.

## Revendications

1. Dispositif d'air secondaire, pour moteur à combustion interne, qui comprend

- un tuyau d'air secondaire (9) qui est relié au moyen d'une ouverture d'entrée (9a) à un trajet d'admission (1) et au moyen d'une ouverture de sortie (9b) à un trajet de gaz d'échappement (8), l'ouverture d'entrée (9a) étant disposée en aval d'un débitmètre d'air (13), qui détermine une valeur de mesure d'un premier débit

massique d'air ($\dot{m}_{LMM}$), et en amont d'un papillon des gaz (4),
- une valve d'air secondaire (10) disposée dans le tuyau d'air secondaire (9),
- un dispositif de commande (24), qui commande un degré d'ouverture (OG) de la valve d'air secondaire (10),

   **caractérisé**

- **en ce que** le dispositif de commande comporte un observateur (25), qui contient un modèle physique du trajet d'admission (1) et du dispositif d'air secondaire,
- **en ce que** l'observateur détermine une valeur estimée du débit massique d'air secondaire ($\hat{\dot{m}}_{SL}$) conformément à la formule

$$\hat{\dot{m}}_{SL} = K1^{\cdot} \hat{A}_{R\_SL} \qquad (9.0)$$

K1 étant un premier facteur de correction et ($\hat{A}_{R\_SL}$) une aire d'écoulement en section transversale d'observateur réduite à l'endroit de la valve d'air secondaire (10), laquelle se compose d'une aire d'écoulement en section transversale réduite ($A_{R\_SL}$) et d'une aire d'écoulement en section transversale de correction ($\Delta\hat{A}_{R\_SL}$).
- **en ce que** l'aire d'écoulement en section transversale réduite ($A_{R\_SL}$) est déterminée à partir d'une deuxième table caractéristique (KF2) en fonction du degré d'ouverture (OG) de la valve d'air secondaire (10).
- **en ce que** l'observateur détermine le deuxième débit massique d'air ($\hat{\dot{m}}_{CYL}$) en fonction de l'angle d'ouverture ($\alpha_{DK}$) du papillon des gaz (4), d'une pression de gaz en amont du papillon des gaz (4) et d'une pression de tubulure d'admission ($p_S$).
- **en ce qu'**un régulateur (29) détermine l'aire d'écoulement en section transversale de correction ($\Delta\hat{A}_{R-SL}$) en fonction du débit massique d'air secondaire ($\hat{\dot{m}}_{SL}$), du premier débit massique d'air ($\dot{m}_{LMM}$) et du deuxième débit massique d'air ($\hat{\dot{m}}_{CYL}$) et
- **en ce que** la masse de carburant qui est injectés par un dispositif d'injection (19d) est réglée en fonction de la valeur estimée du débit massique d'air secondaire ($\hat{\dot{m}}_{SL}$).

2. Dispositif d'air secondaire suivant la revendication 1, **caractérisé en ce que** la somme du débit massique d'air secondaire ($\hat{\dot{m}}_{SL}$) et du deuxième débit massique d'air ($\hat{\dot{m}}_{CYL}$) constitue la grandeur réglée et le premier débit massique d'air ($\dot{m}_{LMM}$) constitue la grandeur de référence pour le régulateur (29), dont le signal de réglage détermine l'aire d'écoulement en section transversale de correction ($\Delta\hat{A}_{R\_SL}$).

3. Dispositif d'air secondaire suivant l'une des revendications précédentes, **caractérisé**

- **en ce qu'**une pompe (11) est disposée dans le tuyau d'air secondaire (9),
- **en ce que** le premier facteur de correction (K1) est déterminé à partir d'une troisième table caractéristique (KF3) qui dépend de la pression ambiante ($p_U$), d'une contre-pression de gaz d'échappement ($p_A$) et/ou de la température d'air d'admission ($T_L$).

4. Dispositif d'air secondaire suivant l'une des revendications 1 ou 2, **caractérisé**

- **en ce que** le moteur à combustion interne comprend un suralimenteur (28) qui est disposé en amont d'un réservoir de suralimentation (27), le réservoir de suralimentation (27) étant disposé en amont du débitmètre d'air (13) dans le trajet d'admission (1) et un capteur de pression de suralimentation (30), qui détecte une pression de suralimentation ($p_L$), étant disposé dans le réservoir de suralimentation (27),
- **en ce que** le premier facteur de correction (K1) est une fonction de la pression de suralimentation ($p_L$), de la contre-pression de gaz d'échappement ($p_A$) et de la température d'air d'admission ($T_L$).

5. Dispositif d'air secondaire suivant la revendication 4, **caractérisé en ce que** le premier facteur de correction (K1) est déterminé conformément à la formule

$$K1 = \sqrt{\frac{2\kappa}{\kappa-1} \cdot \frac{1}{R_L \cdot T_U}} \cdot \Psi \cdot p_L \qquad (11.0)$$

avec

$$\Psi = \sqrt{\left(\frac{P_L}{P_A}\right)^{2\kappa} - \left(\frac{p_L}{P_A}\right)^{\frac{\kappa-1}{\kappa}}}$$

$\kappa$ :     l'exposant adiabatique

$R_L$ :     la constante universelle des gaz.

6.   Dispositif d'air secondaire suivant l'une des revendications précédentes, **caractérisé en ce qu'**il est prévu un dispositif de diagnostic (23), servant à surveiller le dispositif d'air secondaire, qui constate un état de défaillance lorsque l'aire d'écoulement en section transversale d'observateur réduite (ARED_SL) est située en dehors d'un domaine de valeurs.

FIG 1

EP 0 928 366 B1

FIG 2

EP 0 928 366 B1

# FIG 3

# FIG 4

FIG 5

```
        ( Start ) —— S1
            │
            ▼
  ┌──────────────────┐
  │ Ermitteln  m̂_SL │ —— S2
  └──────────────────┘
            │
            ▼
  ┌──────────────────────┐
  │ SL_SP = [3D graph]   │ —— S3
  └──────────────────────┘
            │
            ▼
  ┌──────────────────────┐
  │ Bestimmen SL_VER     │ —— S4
  └──────────────────────┘
            │
            ▼
  ┌──────────────────────┐
  │ SL_DIAG = [3D graph] │ —— S5
  └──────────────────────┘
            │
            ▼
         ◇ SL_VER >
  S6 ——  SL_DIAG + HYS  —— Ja ——→ ┌────────┐ S7
         ?                        └────────┘
            │                         │
          Nein                        │
            │                         │
            ▼                         │
S9  ┌────────┐       ◇ SL_VER <       │
    └────────┘ ←— Ja  SL_DIAG - HYS —— S8
       │           ?                  │
       │         Nein                 │
       │           │                  │
       │           ▼                  │
       │     ┌────────┐ —— S10        │
       │     └────────┘               │
       │           │                  │
       └────────→ ( Ende ) ←──────────┘
                     │
                    S11
```

FIG 6

$$Start \quad \text{—— S1a}$$

Ermitteln $\hat{A}_{R\_SL}$ —— S2a

$A_{R\_SL} =$ —— S3a

$SL\_VER = A_{R\_SL} / \hat{A}_{R\_SL}$ —— S4a

$SL\_DIAG =$ —— S5

S6 — $SL\_VER > SL\_DIAG + HYS$ ? —— Ja —— S7

Nein

S9 — Ja — $SL\_VER < SL\_DIAG - HYS$ ? — S8

Nein

S10

Ende

S11